Europäisches Patentamt

(19) European Patent Office

Office européen des brevets

(11) Veröffentlichungsnummer: **0 029 969**

**A1**

(12) # EUROPÄISCHE PATENTANMELDUNG

(21) Anmeldenummer: 80107250.5

(22) Anmeldetag: 20.11.80

(51) Int. Cl.³: **G 03 G 15/00**
G 03 B 27/62, B 65 H 5/10

(30) Priorität: 28.11.79 DE 2947865

(43) Veröffentlichungstag der Anmeldung:
10.06.81 Patentblatt 81/23

(84) Benannte Vertragsstaaten:
BE DE FR GB IT NL

(71) Anmelder: HOECHST AKTIENGESELLSCHAFT
Postfach 80 03 20
D-6230 Frankfurt/Main 80(DE)

(72) Erfinder: Schön, Klaus-Peter
Rathenauplatz 14
D-6200 Wiesbaden(DE)

(72) Erfinder: Schmitt, Klaus
Schiefersteinstrasse 20
D-6200 Wiesbaden(DE)

(54) Vorrichtung zum Ausrichten und Zuführen einer Vorlage.

(57) Die Erfindung betrifft eine halbautomatische Ausricht-
und Zufuhrvorrichtung (1) für Kopiergeräte zum Ausrichten
und Zuführen einer Vorlage (25) von einem Anlegetisch (17)
zu einer Vorlagenbühne (5). Es sind Sensoren ($L_1$ bis $L_5$) zum
Abtasten der Vorlage in verschiedenen Positionen vorgesehen. Die Sensoren sind bis auf einen Sensor ($L_2$) im bzw. am
schwenkbaren Deckel (3) der Vorrichtung angeordnet. Die
von Hand auf den Anlegetisch (17) aufgelegte Vorlage wird
von einer mit Springsaugern (12,12') ausgerüsteten Saugschiene (11) angesaugt, die entsprechend ihrer jeweiligen
Betriebsweise entweder mit Saug- oder mit Druckluft beaufschlagt wird und aus einer Ausgangsstellung in eine Endstellung und wieder zurück verfahrbar ist. In der Endstellung
werden die Springsauger mit Druckluft beaufschlagt, so daß
die Vorlage auf die Vorlagenbühne präzise ausgerichtet abgelegt wird.

./...

Fig. 1

Vorrichtung zum Ausrichten und Zuführen einer Vorlage

Die Erfindung betrifft eine Vorrichtung zum Ausrichten und Zuführen einer Vorlage von einem Anlegetisch zu einer Vorlagenbühne eines Kopiergeräts, mit einer in einer Ecke des Anlegetisches schräg zur Transportrichtung der Vorlage angeordneten antreibbaren Einzugsrolle, mit Sensoren zum Abtasten der Vorlage in verschiedenen Positionen und zum Auslösen einer Transportbewegung der Vorlage, von denen ein Sensor die Einzugsrolle über eine Steuerung kurzfristig antreibt, wenn er die Anwesenheit einer Vorlage feststellt, und mit einer aus dem Transportweg der Vorlage entfernbaren Anlegeleiste.

Eine derartige Vorlagen-Ausricht- und Zuführvorrichtung für ein Kopiergerät ist aus der DE-OS 27 12 143 bekannt, mit der zwei Vorlagen, die nebeneinander Seite an Seite ausgerichtet sind, von einer Einzugsstation zu der Vorlagenbühne mit der Abtaststation eines Kopiergeräts zugeführt werden können, wobei die beiden Vorlagen von der Bedienungsperson einzeln nacheinander auf die Einzugsstation bereitgelegt werden.

Eine halbautomatische Zuführung von einzelnen Vorlagen ist in der US-PS 3 908 986 beschrieben. Bei der halbautomatischen Vorlagenzuführung werden die Vorlagen manuell auf eine Einzugsstation gelegt, und erst die Zuführung zu der Vorlagenbühne erfolgt automatisch, im

HOECHST AKTIENGESELLSCHAFT
KALLE Niederlassung der Hoechst AG

- 2 -

Gegensatz zu einer vollständig automatischen Vorlagenzuführung, bei der ein Stapel von Vorlagen oder Originalen in ein Vorratsfach gelegt wird, die dann einzeln
und nacheinander maschinell von dem Stapel zur Einzugsstation und von dort zur Vorlagenbühne gefördert werden. Bei der bekannten halbautomatischen Zuführvorrichtung werden die einzelnen Vorlagen, die einzeln auf
die Einzugsstation gelegt werden, von einer Ausrichtvorrichtung erfaßt, ausgerichtet und aufgrund von Steuerungen durch die Maschine von der Transportvorrichtung
erfaßt und auf die Vorlagenbühne zum Kopieren bzw. Abtasten vorgeschoben.

Bei den bekannten halbautomatischen Zuführvorrichtungen, ebenso wie bei den Vorrichtungen nach der US-PS
4 023 791, der DE-OS 27 58 044 und der DE-AS 24 38 483
bestehen die Transportvorrichtungen aus Transportbändern und Transportrollen. Bei diesen Vorrichtungen
kommt es immer wieder, bedingt durch unterschiedliche
Reibung, durch Schwankungen der Schichtdicken oder der
Durchmesser der Transportrollen, zum Versatz der Vorlage beim Verschieben über die Vorlagebühne. Durch
dieses falsche bzw. nicht ausgerichtete Positionieren
der Vorlage auf der Vorlagenbühne werden dann Kopien
erhalten, bei denen das Bild gegenüber den Rändern
seitlich schräg versetzt ist und daher die Kopien nicht
zu gebrauchen sind.

HOECHST   AKTIENGESELLSCHAFT
KALLE   Niederlassung der Hoechst AG

- 3 -

Aus der DE-OS 26 10 480 ist eine Blattzuführeinrichtung
für ein Faksimile- oder ein ähnliches System bekannt,
die eine Saugeinrichtung mit einem Saugfuß aufweist,
der an dem Blattstapel in Anlage gebracht wird. Ein Andrückteil wird von dem Saugfuß getragen und umgibt diesen, wobei ein Ende des Andrückteils über ein Ende des
Saugfußes vorsteht. Mit dieser Blattzuführeinrichtung
wird Luft gegen die Blattkanten des Stapels geblasen
und eine Saugkraft über den oder über mehrere Saugfüße
ausgeübt, um auf diese Weise das oberste Blatt des Stapels aufzunehmen. Ein Ausrichten und Positionieren des
Blattes bei der Aufnahme bzw. bei der Ablage nach erfolgtem Transport findet nicht statt.

Aufgabe der Erfindung ist es, eine Vorrichtung zu
schaffen, mit der ein genaues Positionieren der Vorlage
auf einem Anlegetisch, deren versetzungsfreier Transport zur Vorlagenbühne und ein präzises Ablegen der
Vorlage an einer vorgegebenen Stelle auf der Vorlagenbühne automatisch erfolgt, ohne daß die Vorlage beim
Auflegen auf den Anlegetisch von Hand aus exakt ausgerichtet werden muß.

Diese Aufgabe wird erfindungsgemäß bei der Vorrichtung
der eingangs beschriebenen Art durch die Merkmale im
kennzeichnenden Teil des Anspruchs 1 gelöst.

Gemäß dieser Ausgestaltung erfolgt der Transport der
Vorlage von dem Auflagetisch zu der Vorlagenbühne mittels einer Transportvorrichtung, die mit Saug- und

HOECHST AKTIENGESELLSCHAFT
KALLE Niederlassung der Hoechst AG

- 4 -

Druckluft beaufschlagbar ist. Diese Transportvorrichtung ist zusammen mit der Einzugsrolle in einem Deckel angeordnet und oberhalb des Anlegetisches und der Vorlagenbühne hin- und herverfahrbar. Die Einzugsrolle richtet die Vorlage, nachdem diese von der Bedienungsperson auf den Anlegetisch gelegt wurde, automatisch in einer Anlege-Ecke winkelig aus, bevor die Transportvorrichtung mit Saugluft die Vorderkante der Vorlage ansaugt und in Richtung der Vorlagenbühne bewegt. Durch im und am Deckel angebrachte Sensoren, die der Einzugsrolle und der Transportvorrichtung zugeordnet sind, sowie einem Sensor für die Anlegeleiste, die aus der Transportebene absenkbar ist, wird die genaue Position und Ausrichtung der Vorlage vorgenommen, die exakt ausgerichtet durch die Transportvorrichtung zu ihrem Ablagepunkt auf der Vorlagenbühne bewegt wird. Durch das Festhalten der Vorlage mittels Saugluft während des Transportes ist ein Verrücken nicht möglich, ebensowenig ein Versetzen beim Ablegen der Vorlage auf der Vorlagenbühne. Dadurch wird erreicht, daß jede Vorlage genau ausgerichtet auf der Vorlagenbühne aufliegt, so daß die davon erstellten Kopien keine Versetzungen aufweisen und somit die Anzahl der wegzuwerfenden Kopien, die Versetzungsmängel aufweisen können, gleich Null wird.

Die weitere vorteilhafte Ausgestaltung und Weiterbildung der Erfindung ergibt sich aus den Merkmalen der Unteransprüche.

HOECHST AKTIENGESELLSCHAFT
KALLE Niederlassung der Hoechst AG

- 5 -

Einzelheiten und Arbeitsweise der erfindungsgemäßen
Vorrichtung ergeben sich aus der Beschreibung eines
bevorzugten Ausführungsbeispiels, das in den Figuren
dargestellt ist.

Es zeigen:

Figur 1    eine perspektivische Draufsicht auf ein bevor-
           zugtes Ausführungsbeispiel der erfindungsge-
           mäßen Vorrichtung, mit von dem Anlegetisch und
           der Vorlagenbühne weggeklapptem Deckel;

Fig. 2     eine Ansicht der Vorrichtung nach Figur 1, mit
           abgenommener Abdeckung des hochgeklappten
           Deckels; und

Fig. 3     ein Blockschaltbild der Steuerung für die einzelnen Bauteile der Vorrichtung nach den Figuren 1 und 2.

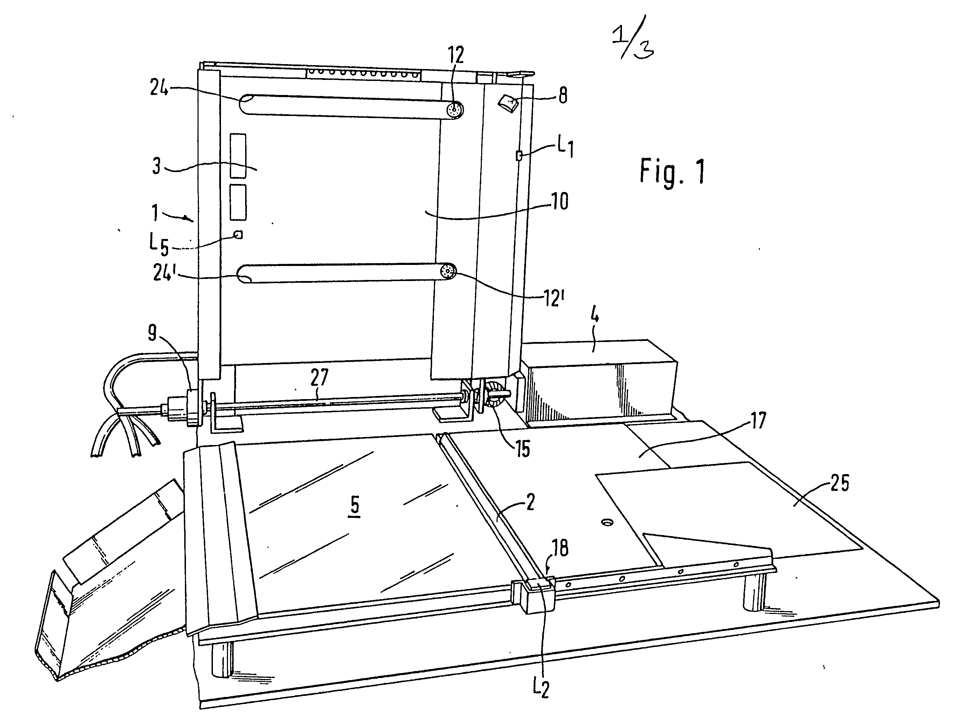

Fig. 1 zeigt eine perspektivische Draufsicht auf ein
bevorzugtes Ausführungsbeispiel der halbautomatischen
Ausricht- und Zufuhrvorrichtung, deren Deckel 3 hochgeklappt ist. Eine Vorlage 25 wird von einer Bedienungsperson auf einen Anlegetisch 17 aufgelegt und in
Richtung auf eine an den Anlegetisch (17) anschließende
Vorlagenbühne geschoben. Ein erster Sensor $L_1$ , z.B.
eine an der Stirnseite des Deckels angeordnete Infrarot-Reflexlichtschranke erfaßt die Vorderkante der Vorlage 25 und löst mit ihrem Signal einen Motor 6 aus,
der eine Einzugsrolle 8 in Drehung versetzt. Die Einzugsrolle 8 ist schräg zu der Transportrichtung der Vorlage 25 nahe einer der vorderen Ecken des Deckels (3) angeordnet. Die Einzugsrolle 8 transportiert die Vorlage 25 bis zum Anschlag an eine Anlegeleiste 2 und an eine Anlege-Ecke 18. Im Bereich der Anlegeleiste 2 befindet sich ein zweiter Sensor $L_2$ und im Bereich der Anlage-Ecke 18 ein dritter Sensor $L_3$. Die Sensoren $L_2$ und $L_3$ stellen fest, ob die Vorlage 25 die richtige Lage einnimmt, d.h. an der Anlegeleiste 2 und an der Anlege-Ecke 18 bündig anliegt. Befindet sich die Vorlage 25 in der exakten Position, so bewirken die Impulse der Sensoren $L_2$ und $L_3$, daß die Anlegeleiste 2, die zwischen der Vorlagenbühne 5 und dem Anlegetisch 17 angeordnet ist, unter das Niveau des Anlegetisches bzw. der Vorlagenbühne abgesenkt wird. Im Inneren des Deckels 3 befindet sich eine Transportvorrichtung bestehend aus einer Saugleiste 11 und Springsaugern 12,12', die an den beiden Enden der Saugleiste 11 befestigt sind. Die Saugleiste 11 ist in Transportrichtung der Vorlage 25 hin und herverfahrbar. Wie Figur 1 zeigt, ist die Unterseite des Deckels 3 durch eine Abdeckung 10 abgeschlossen, in der zwei Führungsschlitze 24,24', für die Springsauger 12,12' vorhanden sind. Als Abdeckung 10 kann eine weiß mattierte Folie vorgesehen werden. Die Springsauger 12,12' sind über eine Vakuumleitung 7 mit einer Saug- und Druckquelle 26 verbunden. Werden die Springsauger 12,12' mit Saugluft beaufschlagt, so bewegen sie sich auf die Vorlage 25 zu, springen, sobald das Vakuum aufgebaut ist, in die Ausgangsstellung zurück und heben so die Vorlage von der
Auflagefläche des Anlegetisches 17 ab.

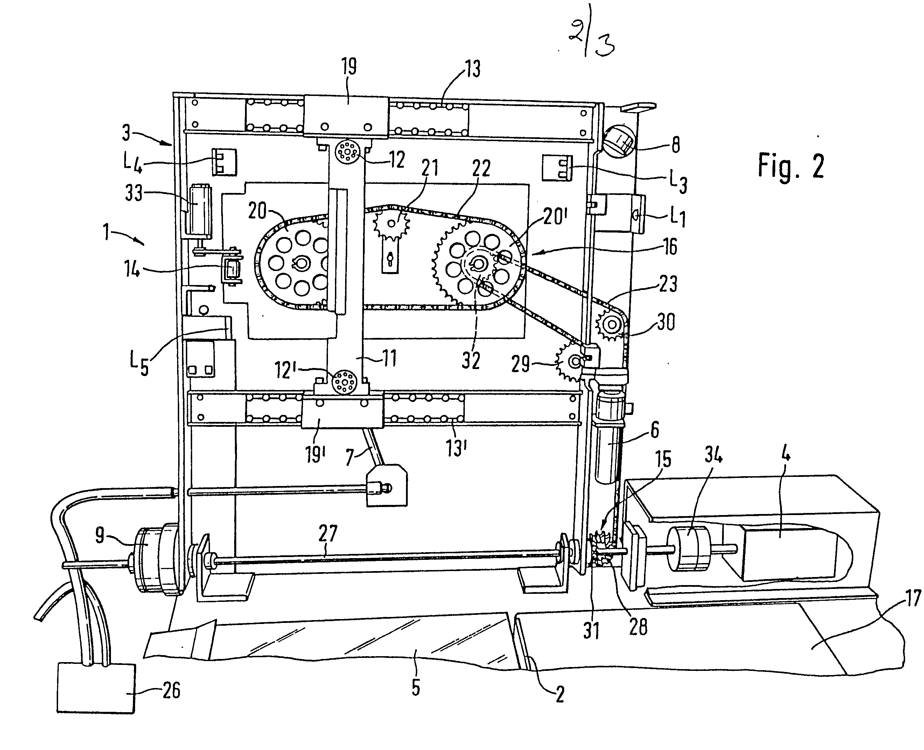

Für den Transport der Saugleiste 11 sind an deren Enden
Schlittenwagen 19,19' angeordnet, die längs Kugellinearführungen 13,13' (Figur 2) verfahrbar sind. Hierzu
ist ein Kettenantrieb aus einem Winkelgetriebe 15 und
einem Transportgetriebe 16 vorgesehen, die von einem
Hauptmotor 4 angetrieben werden, der an der einen
Schmalseite des Anlegetisches 17 angebracht ist und
dessen Abtriebswelle 27 parallel zu der Transportrichtung der Vorlage 25 ausgerichtet ist. Das dem Hauptmotor 4 gegenüberliegende Ende der Antriebswelle 27 trägt
eine Bremse 9.

Das Transportgetriebe 16 besteht aus zwei Umlenkzahnrädern 20,2o', einem Spannzahnrad 21 und einer um die
Umlenkzahnräder und um das Spannzahnrad 21 geführten
endlosen Zahnradkette 22. Die Umlenkzahnräder 20,20'
und das Spannzahnrad 21 sind an der Unterseite der
Deckfläche des Deckels 3 angeordnet und drehen sich,
angetrieben von der Zahnradkette 22 um in der Deckfläche befestigte Achsen herum. Das Transportgetriebe 16
ist mit dem Winkelgetriebe 15 durch eine endlose Zahnradkette 23 verbunden, die über Zahnräder 29,30
geführt ist und um diese winkelig abgelenkt wird. Des
weiteren ist die Zahnradkette 23 um ein Kegelzahnrad 28
des Winkelgetriebes 15 geführt, das mit einem direkt
auf der Abtriebswelle 27 des Hauptmotors 4 sitzenden Kegelzahnrad 31 kämmt, sowie ein in Figur 2 gestrichelt
dargestelltes Zahnrad 32, das hinter dem Umlenkzahnrad
(20') auf dessen Achse aufsitzt.

In der Warteposition der Vorlage 25, wenn diese gegen
die Anlegeleiste 2 und die Anlege-Ecke 18 bündig ausgerichtet anliegt, bevor noch die Anlegeleiste 2 abgesenkt wird, ist die Antriebswelle 27 durch eine Kupplung 34 vom Hauptmotor 4 getrennt, so daß der umlaufende Hauptmotor 4 das Winkelgetriebe 15 nicht in Bewegung
versetzen kann. Sobald der zweite und der dritte Sensor
$L_2$ bzw. $L_3$ in dieser Warteposition aktiviert werden,
wird die Kupplung 34  ausgelöst, welche das Kegelzahnrad 31 auf der Abtriebswelle 27 des Hauptmotors 4 in
Eingriff mit dem Kegelzahnrad 28 des Winkelgetriebes 15
bringt und dadurch über das Winkelgetriebe 15 das
Transportgetriebe 16 in Bewegung versetzt, das die
Saugleiste 11 mit der von den Springsaugern 12,12'
angesaugten Vorlage 25 in Richtung auf die Vorlagebühne
verfährt.

Die Saugleiste 11 kommt über einer Austragrolle 14 zum
Stillstand, die im Deckel 3 untergebracht ist und auf
der Glasplatte der Vorlagenbühne 5 aufliegt. Sobald die
Saugleiste 11 stillsteht, werden die Springsauger
12,12' von Saug- auf Druckluft umgeschaltet und die
Vorlage 25 mit der Vorderkante unterhalb der Austragrolle 14 auf der Bühne 5 abgelegt. Es folgt dann
der Belichtungsvorgang in der Kopiermaschine. Sobald
die erforderliche Anzahl von Kopien erstellt ist, startet ein Impuls eines Zählers der Kopiermaschine einen Austragsmotor 33, der die Austragsrolle 14 in eine Drehung versetzt, welche die Vorlage 25 von der Vorlagenbühne 5 wegtransportiert.

Wie nachstehend noch näher beschrieben werden wird, läuft dann die Saugschiene 11 mit den Springsaugern 12,12' wieder in ihre Ausgangsstellung zurück und steht für den Einzug einer neuen Vorlage bereit.

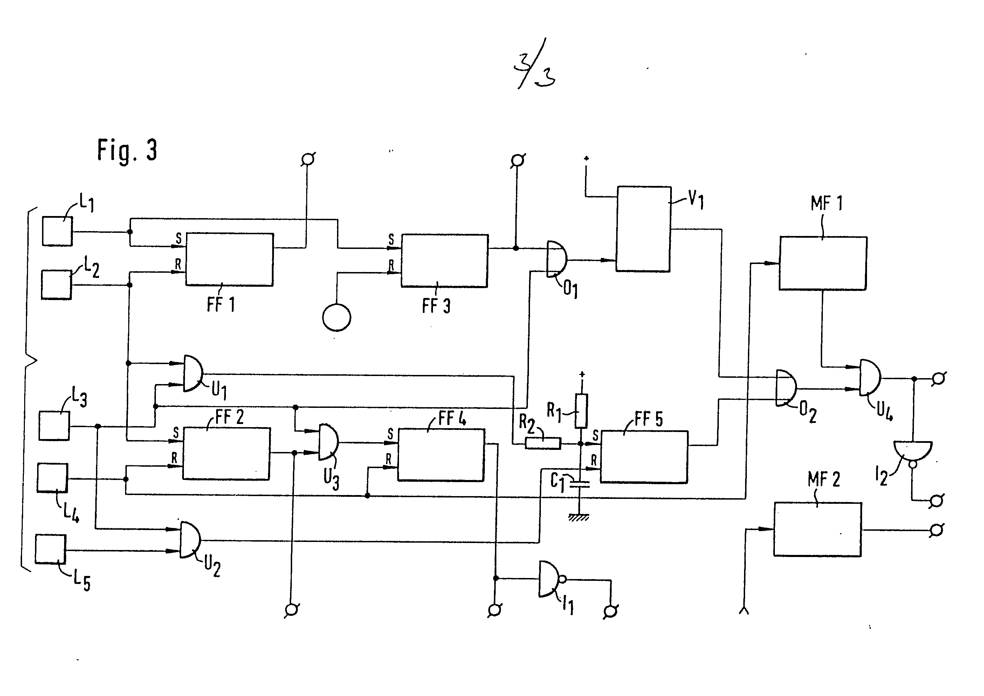

Der Schaltungsaufbau bzw. die elektronische Logik zur Steuerung der Vorrichtung wird unter Bezugnahme auf Figur 3 beschrieben.

Für die Steuerlogik werden bekannte Logikbausteine verwendet, die mit einer stabilisierten Betriebsspannung von beispielsweise +15 Volt betrieben werden. Die Betriebsspannung wird zeitverzögert an die Steuerlogik angelegt, um die Einschaltstörungen des Kopiergeräts auszuschalten. Die von Hand eingeschobene Vorlage 25 wird von dem ersten Sensor $L_1$, der eine Infrarot-Reflexlichtschranke ist, erfaßt. Der Ausgang des Sensors $L_1$ ist einerseits mit einer ersten FLIP-FLOP Schaltung FF1 und andererseits mit einer dritten FLIP-FLOP Schaltung FF3 verbunden. Der Ausgangsimpuls des Sensors $L_1$ läßt die erste FLIP-FLOP Schaltung kippen. Deren Ausgang ist mit dem Motor 6 für die Betätigung der Einzugsrolle 8 verbunden, so daß das Ausgangssignal der FLIP-FLOP Schaltung FF1 den Motor 6 in Betrieb setzt und die Einzugsrolle die Vorlage 25 in

HOECHST AKTIENGESELLSCHAFT
KALLE Niederlassung der Hoechst AG

- 10 -

die Warteposition transportiert. In dieser Position unterbricht die Vorlage 25 den Lichtstrahl des zweiten Sensors $L_2$, bei dem es sich beispielsweise um eine Infrarot-Gabellichtschranke handelt, die mit der ersten FLIP-FLOP Schaltung FF1, einer ersten UND-TOR Schaltung $U_1$ und einer zweiten FLIP-FLOP Schaltung FF2 verbunden ist. Das Ausgangssignal des Sensors $L_2$ läßt die erste FLIP-FLOP Schaltung FF1 zurückkippen, wodurch die Einzugsrolle stillgesetzt wird. Des weiteren wird die zweite FLIP-FLOP Schaltung FF2 getriggert, deren Ausgang mit dem nicht dargestellten Betätigungsmechanismus für die Anlegeleiste 2 verbunden ist. Das Ausgangssignal der zweiten FLIP-FLOP Schaltung FF2 klappt somit die Anlegeleiste 2 nach unten, so daß der Transportweg der Vorlage 25 in Richtung Vorlagenbühne 5 freigegeben wird. Ferner liegt das Ausgangssignal des Sensors $L_2$ an der ersten UND-TOR Schaltung $U_1$ an.

Wenn die zweite FLIP-FLOP Schaltung FF2 gekippt ist und die Saugleiste 11 in einer Warteposition einen dritten Sensor $L_3$ aktiviert, dessen Ausgang mit der ersten UND-TOR Schaltung $U_1$, mit einer ersten ODER-TOR Schaltung $O_1$ und mit einer zweiten UND-TOR Schaltung $U_2$ verbunden ist, liegen an der ersten UND-TOR Schaltung $U_1$ eingangsseitig die Signale des zweiten Sensors $L_2$ und des dritten Sensors $L_3$ an, wodurch diese Torschaltung $U_1$ durchschaltet, die über ein Zeitglied $R_1$, $R_2$, $C_1$ mit einer fünften FLIP-FLOP Schaltung FF5 verbunden ist. Der Sensor $L_3$ steht des weiteren noch mit einer dritten UND-TOR Schaltung $U_3$ in Verbindung. Der andere Eingang

HOECHST AKTIENGESELLSCHAFT
KALLE Niederlassung der Hoechst AG

- 11 -

dieser UND-TOR Schaltung $U_3$ ist mit dem Ausgang der zweiten FLIP-FLOP Schaltung FF2 verbunden. Der Ausgang eines vierten Sensors $L_4$ ist eingangsseitig an die zweite FLIP-FLOP Schaltung FF2, die vierte FLIP-FLOP Schaltung FF4 und an einen ersten monostabilen Multivibrator MF1 angeschlossen. Wenn die zweite FLIP-FLOP Schaltung FF2 gekippt ist und die Saugleiste 11 sich in Warteposition am dritten Sensor $L_3$ befindet, so schalten das Ausgangssignal des dritten Sensors $L_3$ und das Ausgangssignal der zweiten FLIP-FLOP Schaltung FF2 die dritte UND-TOR Schaltung $U_3$ durch, so daß die vierte FLIP-FLOP Schaltung FF4 getriggert wird. Das Ausgangssignal dieser FLIP-FLOP Schaltung FF4 steuert das Vakuum für die Springsauger 12,12' und öffnet ein nicht gezeigtes Vakuumventil in der Vakuumleitung 7, wodurch die Springsauger 12,12' auf der Saugleiste 11 mit Vakuum beaufschlagt werden und die Vorderkante der Vorlage 25 ansaugen. Mit dem Öffnen des Vakuumventils wird zugleich ein Druckventil geschlossen, das im geöffneten Zustand die Springsauger 12,12' mit Druckluft beaufschlagt. Die fünfte FLIP-FLOP Schaltung FF5 ist über eine zweite ODER-TOR Schaltung $O_2$ und eine vierte UND-TOR Schaltung $U_4$ mit der Kupplung 9 verbunden, um das Winkelgetriebe 15 und das Transportgetriebe 16 zum Verfahren der Saugschiene 11 in Bewegung zu versetzen. Die Saugschiene 11 wird dann in Richtung des vierten Sensors $L_4$, beispielsweise eine Lichtschranke, verfahren. Sobald der Sensor $L_4$ durch ein an der Saugschiene 11 befestigtes Fähnchen aktiviert ist, setzt der Ausgangsimpuls des Sensors $L_4$ die zweite FLIP-FLOP Schal-

tung $FF_2$ und die vierte FLIP-FLOP Schaltung FF4 zurück, wodurch die Anlegeleiste 2 wieder angehoben und das Vakuumventil in der Vakuumleitung 7 geschlossen wird. Gleichzeitig wird über den ersten Inverter $I_1$ das Druckluftventil geöffnet und die Springsauger 12,12' auf der Saugleiste 11 mit Druckluft beaufschlagt. Zugleich wird auch der erste monostabile Multivibrator MF1 ausgelöst, der einen zeitlich begrenzten Ausgangsimpuls über die vierte UND-TOR Schaltung $U_4$ an die Bremse 9 und die Kupplung 34 liefert, welche die Abtriebswelle 27 des Hauptmotors 4 entkuppelt und abbremst. Entsprechend der Dauer des zeitlich begrenzten Ausgangsimpulses des monostabilen Multivibrators MF1 wird der Transport der Vorlage 25 während dieser Zeitspanne ausgeschaltet. In der Zwischenzeit wird die Vorlage 25 durch die Druckluft von den Springsaugern 12,12' abgelöst und auf die Glasplatte der Vorlagenbühne 5 abgelegt. Durch das Ablegen der Vorlage 25 wird der fünfte Sensor $L_5$, beispielsweise eine Reflexlichtschranke aktiviert und das Ausgangssignal des fünften Sensors $L_5$ der zweiten UND-TOR Schaltung $U_2$ zugeleitet. Liegt an dieser Torschaltung $U_2$ gleichzeitig ein Ausgangssignal des dritten Sensors $L_3$ an, so schaltet die zweite UND-TOR Schaltung $U_2$ durch und kippt die fünfte FLIP-FLOP Schaltung FF5 in die Stellung zurück, in der kein Ausgangssignal der FLIP-FLOP Schaltung FF5 an die zweite ODER-TOR Schaltung $O_2$ gelangt, so daß die Kupplung 9 nicht gekuppelt wird und somit kein Transport stattfindet.

HOECHST AKTIENGESELLSCHAFT
KALLE Niederlassung der Hoechst AG

- 13 -

Nach Ablauf der voreingestellten Zeit des ersten monostabilen Multivibrators MF1 wird die vierte UND-TOR Schaltung $U_4$ freigegeben, d.h. schaltet durch, so daß die Kupplung 34 erregt wird, die Bremse 9 abgeschaltet und ein Transport stattfindet, durch welchen die Saugschiene 11 in ihre Ausgangsstellung in Richtung des dritten Sensors $L_3$ verfahren wird. Der Ausgang der vierten UND-TOR Schaltung $U_4$ ist einerseits mit der Klemme "Transport" und andererseits über einen zweiten Inverter $I_2$ mit der Klemme "Bremse" verbunden. Bei dem Zurückstellen der Saugschiene 11 in Richtung des drit-ten Sensors $L_3$ wird der Transportimpuls durch den Inverter $I_2$ umgekehrt und schaltet die Bremse 9, um ein exaktes Positionieren der Saugschiene 11 beim Erreichen ihrer Ausgangsstellung vornehmen zu können. Sobald die Saugschiene 11 bei Erreichen des dritten Sensors $L_3$ stoppt, ist der Transport blockiert. Eine bereits wieder eingelegte Vorlage 25 kann erst dann wieder angesaugt und transportiert werden, wenn von einem Zähler der Kopiermaschine ein Startimpuls für einen zweiten monostabilen Multivibrator MF2 eingespeist wird, der dann ein Ausgangssignal an die Klemme "Austrag" liefert, an die der Austragsmotor 33 für die Vorlage 25 angeschlossen ist. Dieser wird dann durch das Ausgangssignal des zweiten monostabilen Multivibrators MF2 in Betrieb gesetzt und transportiert die Vorlage von der Vorlagenbühne ab. Erst nachdem die Vorlage 25 den fünften Sensor $L_5$ freigegeben hat, kann ein neuer Zufuhr- und Ausrichtezyklus mit der bereits eingelegten Vorlage 25 starten.

- 14 -

Beim Einschalten der Vorrichtung 1 wird von einem Vergleicher V1 die Position der Saugschiene 11 festgestellt und gegebenenfalls, wenn der dritte Sensor $L_3$ durch die Saugschiene nicht aktiviert ist, ein Transportimpuls von dem Vergleicher V1 an die zweite ODER-TOR Schaltung $O_2$ geliefert, wodurch der Transport ausgelöst und die Saugschiene 11 zu dem dritten Sensor $L_3$ transportiert wird. Der Vergleicher V1 erhält beim Einschalten der Vorrichtung über die dritte FLIP-FLOP Schaltung FF3 von dem ersten Sensor $L_1$ seine Auslösesignal.

Die dritte FLIP-FLOP Schaltung FF3 kann eingangsseitig durch ein Signal aus dem Kopiergerät, z.B. von einem Zähler kommend, zurückgestellt werden. Das Ausgangssignal der FLIP-FLOP Schaltung $FF_3$ schaltet die Vakuumpumpe ab.

Für jede Schaltstufe der Steuerlogik wird bevorzugt ein Darlington-Leistungstransistor in Emitterschaltung verwendet. Die Ansteuerung des Leistungstransistors erfolgt über eine Reihenschaltung eines 10 Kiloohm Widerstandes und einer 8,2 Volt Zener-Diode. Wie schon erwähnt, werden für die Sensoren Infrarotreflex-Lichtschranken und Gabellichtschranken verwendet, von denen die Reflex-Lichtschranken einen nachgeschalteten Vorverstärker aufweisen.

---

H O E C H S T   A K T I E N G E S E L L S C H A F T
KALLE  Niederlassung der Hoechst AG

Hoe 79/K 050              - 15 -          18. November 1980
                                          WL-DI.Z.-is

## Patentansprüche

1. Vorrichtung zum Ausrichten und Zuführen einer Vorlage von einem Anlegetisch zu einer Vorlagenbühne eines Kopiergeräts, mit einer in einer Ecke des Anlegetisches schräg zur Transportrichtung der Vorlage angeordneten antreibbaren Einzugsrolle, mit Sensoren zum Abtasten der Vorlage in verschiedenen Positionen und zum Auslösen einer Transportbewegung der Vorlage, von denen ein Sensor die Einzugsrolle über einer Steuerung kurzfristig antreibt, wenn er die Anwesenheit einer Vorlage feststellt, und mit einer aus dem Transportweg der Vorlage entfernbaren Anlegeleiste, dadurch gekennzeichnet, daß eine mit Saug- und Druckluft beaufschlagbare Transportvorrichtung (11,12,12') zusammen mit der Einzugsrolle (8) in einem Deckel (3) untergebracht und oberhalb des Anlegetisches (17) und der Vorlagenbühne (5) hin- und herverschiebbar ist, daß die Transportvorrichtung die durch die Einzugsrolle (8) in einer Anlege-Ecke (18) winkelig ausgerichtete Vorlage an ihrer Vorderkante mittels Saugluft erfaßt und daß die der Einzugsrolle (8) und der Transportvorrichtung (11,12,12') zugeordneten Sensoren ($L_1$, $L_3$, $L_4$, $L_5$) im und am Deckel (3) und der Sensor ($L_2$) für die Anlegeleiste (2) an deren Rand zwischen dem Anlegetisch (17) und der Vorlagenbühne (5) angeordnet sind.

2.  Vorrichtung nach Anspruch 1, dadurch gekennzeichnet, daß die Transportvorrichtung eine Saugleiste (11) und darauf befestigte Springsauger (12,12') um-

0029969

HOECHST  AKTIENGESELLSCHAFT
KALLE  Niederlassung der Hoechst AG

- 16 -

faßt, die über eine Zuleitung (7) mit einer Saug- und
Druckquelle verbunden sind.

3.    Vorrichtung nach den Ansprüchen 1 und 2, dadurch
gekennzeichnet, daß an den Enden der Saugleiste (11)
Schlittenwagen (19,19') angeordnet sind, die längs Kugellinearführungen (13 bzw. 13') verfahrbar sind.

4.    Vorrichtung nach den Ansprüchen 1 und 2, dadurch
gekennzeichnet, daß die Saugleiste (11) in ihrer Ausgangsstellung einen Sensor ($L_3$) aktiviert, dessen Ausgangssignal zusammen mit dem Ausgangssignal eines
weiteren Sensors ($L_2$), der von der ausgerichteten Vorlage aktiviert ist, eine UND-Schaltung ($U_1$) auslöst,
deren Ausgangssignal zeitverzögert einer FLIP-FLOP
Schaltung (FF5) zugeführt wird, die eine Kupplung (9)
betätigt, um ein Kegelzahnrad (31) auf der umlaufenden
Welle (27) eines Hauptmotors (4) in Eingriff mit einem
Kegelzahnrad (28) eines Kettenantriebs (15,16) zu bringen, der die Saugleiste (11) in Richtung Vorlagenbühne
(5) verfährt.

5.    Vorrichtung nach Anspruch 4, dadurch gekennzeichnet, daß die Saugleiste (11) über der Austragsrolle (14) zum Stillstand kommt und daß im Stillstand die
Springsauger (12,12') von Saug- auf Druckluft umschalten und die Vorlage mit der Vorderkante unterhalb der
Austragsrolle (14) auf die Vorlagenbühne (5) ausgerichtet ablegen.

HOECHST AKTIENGESELLSCHAFT
KALLE Niederlassung der Hoechst AG

- 17 -

6.  Vorrichtung nach Anspruch 4, dadurch gekennzeichnet, daß der Kettenantrieb ein Transportgetriebe (16), bestehend aus zwei Umlenkzahnrädern (20,20'), einem Spann-Zahnrad (21) und einer um die Umlenkzahnräder (20,20') geführten endlosen Zahnradkette (22) und ein Winkelgetriebe (15) umfaßt, dessen endlose Zahnradkette (23) mit dem Transportgetriebe (16) verbunden ist und daß ein Kegelzahnrad (28) des Winkelgetriebes (15) mit einem direkt auf der Welle (27) des Hauptmotors (4) aufsitzenden Kegelzahnrad (31) kämmt.

7.  Vorrichtung nach Anspruch 1, dadurch gekennzeichnet, daß ein Motor (6) für den Antrieb der Einzugsrolle (8) im Deckel (3) angeordnet ist und über eine FLIP-FLOP Schaltung (FF1) auslösbar ist, die ein Sensor ($L_1$) anstößt, sobald die Vorlage in seinen Erfassungsbereich eintritt.

---

1/3

Fig. 1

0029969

2/3

Fig. 2

HOECHST AKTIENGESELLSCHAFT – Hoe 79/K 050

Fig. 3

| | Europäisches Patentamt | EUROPÄISCHER RECHERCHENBERICHT | Nummer der Anmeldung<br>EP 80 10 7250.5 |

## EINSCHLÄGIGE DOKUMENTE

| Kategorie | Kennzeichnung des Dokuments mit Angabe, soweit erforderlich, der maßgeblichen Teile | betrifft Anspruch | KLASSIFIKATION DER ANMELDUNG (Int. Cl.³) |
|---|---|---|---|
| | GB - A - 1 532 570 (RANK XEROX)<br>* Ansprüche *<br>-- | 1 | G 03 G 15/00<br>G 03 B 27/62<br>B 65 H 5/10 |
| | US - A - 1 868 381 (A. BÜTTNER)<br>* Ansprüche *<br>-- | 1 | |
| D | DE - A1 - 2 712 143 (IBM)<br>-- | 1 | |
| D | US - A - 3 908 986 (C.D. BLEAU)<br>-- | | **RECHERCHIERTE SACHGEBIETE** (Int. Cl.³) |
| A | DE - A1 - 2 523 986 (IBM)<br>-- | | B 65 H 5/00<br>B 65 H 9/00 |
| A | US - A - 4 171 131 (K.K. STANGE et al.)<br>---- | | B 65 H 29/00<br>G 03 B 27/00<br>G 03 G 15/00<br>G 03 G 21/00 |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |

| Recherchenort<br>Berlin | Abschlußdatum der Recherche<br>02-03-1981 | Prüfer<br>HOPPE |

EPA form 1503.1 06.78